## Europäisches Patentamt
## European Patent Office
## Office européen des brevets

(19)

(11) Numéro de publication: **0 240 409**
**B1**

(12)

# FASCICULE DE BREVET EUROPEEN

(45) Date de publication du fascicule du brevet: **06.06.90**

(51) Int. Cl.⁵: **F 02 D 41/12,** F 02 M 3/04

(21) Numéro de dépôt: **87400649.7**

(22) Date de dépôt: **24.03.87**

(54) Procédé de réalimentation en carburant d'un moteur à combustion interne à la suite d'une coupure en décélération.

(30) Priorité: **02.04.86 FR 8604699**

(43) Date de publication de la demande:
**07.10.87 Bulletin 87/41**

(45) Mention de la délivrance du brevet:
**06.06.90 Bulletin 90/23**

(84) Etats contractants désignés:
**BE DE ES GB IT NL SE**

(56) Documents cités:
**EP-A-0 074 540**
**EP-A-0 089 409**
**EP-A-0 180 522**
**FR-A-2 511 430**
**GB-A-2 069 180**
**GB-A-2 141 842**
**US-A-4 227 490**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Lepretre, Bernard**
**19, rue du Calvaire**
**F-92000 Nanterre (FR)**
Inventeur: **Rousseau, Christian**
**33, rue de la Mutualité**
**F-92160 Antony (FR)**

Courier Press, Leamington Spa, England.

EP 0 240 409 B1

**Description**

L'invention concerne un procédé de commande de la réalimentation en carburant d'un moteur à combustion interne consécutivement à une coupure de son alimentation pendant une phase de décélération d'un véhicule automobile.

Il est connu de l'homme de l'art de couper l'alimentation en carburant d'un moteur lorsque le régime de ce dernier est supérieur à une certaine valeur et que la pédale d'accélérateur est complètement relâchée. Dans ce cas, l'une des difficultés rencontrées réside dans le choix du régime optimal de réalimentation en carburant du moteur. Ce régime doit être supérieur au régime de ralenti pour éviter le calage du moteur, tout en étant le plus bas possible afin de bénéficier au maximum de l'économie de carburant apportée par la coupure en décélération.

On connaît diverses solutions permettant d'éviter le calage d'un moteur dans le cas d'une décélération rapide de celui-ci. C'est ainsi, par exemple, qu'une action de débrayage de la part du conducteur lorsque le moteur n'est pas alimenté risquerait d'accroître sensiblement le gradient de décélération et il y est remédié en suscitant la réalimentation immédiate du moteur en carburant dès que la pédale d'embrayage est enfoncée. Une autre technique décrite dans la demande de brevet français FR—A—2 545 878 consiste à mesurer la vitesse ou la période de rotation du moteur sur des intervalles ou angles de rotation égaux consécutifs, à calculer la différence entre la vitesse ou période mesurée sur le dernier intervalle et la vitesse ou période mesurée sur au moins un intervalle précédent, à comparer cette différence à un seuil fixe et à commander à nouveau l'alimentation en carburant lorsque la différence est supérieure au seuil fixe.

Le document EP—A—89 409 suggère un procédé de commande de la réalimentation en carburant consécutivement à une coupure de l'alimentation du moteur pendant une phase de décélération, du type consistant à calculer et à comparer périodiquement la décélération à un seuil de décélération lente pendant cette phase de coupure de décélération.

Toutefois, dans le cas d'une décélération lente, tous ces procédés ne permettent pas d'éviter le calage du moteur après un temps de décélération suffisamment long ayant pour effet d'assécher les parois du collecteur d'admission. En effet, la quantité de carburant introduite lors de la réalimentation peut, d'une part, ne pas être suffisante pour remouiller les parois du collecteur d'admission et satisfaire les besoins du moteur et, d'autre part, compte tenu du temps de transfert entre le point d'alimentation et les cylindres, ne commencer à brûler qu'après que le régime du moteur soit descendu en-dessous du régime de calage. Ce problème risque particulièrement de se rencontrer si, après une longue décélération du moteur, le conducteur débraye à un régime proche du régime normal de réalimentation et provoque ainsi une chute rapide du régime moteur.

Par ailleurs, il est connu de ne pas effectuer de coupure d'alimentation en carburant pendant la phase de mise en action à froid du moteur et de n'autoriser la coupure que lorsque la température du moteur a atteint une valeur TO déterminant la fin de cette phase. Or, on a pu constater dans certains cas des calages intempestifs lorsque la réalimentation en carburant se produit alors que la température du moteur est comprise entre cette valeur TO et une valeur TC à laquelle le moteur est considéré comme chaud.

L'un des buts de l'invention est de fournir un procédé de commande de la réalimentation en carburant d'un moteur qui permette d'éviter le calage de ce dernier à la suite d'une longue phase de décélération pendant laquelle son alimentation en carburant est coupée.

A cet effet, le procédé de l'invention du type consistant à calculer et à comparer périodiquement la décélération du moteur à un seuil de décélération lente pendant la phase de coupure en décélération, est caractérisé en ce que:

on commande au moins une alimentation temporaire du moteur pendant une durée déterminée si ladite décélération est inférieure audit seuil, et la vitesse de rotation du moteur est supérieure à une certaine valeur.

on commande une réalimentation définitive du moteur si ladite décélération est supérieure audit seuil, et la vitesse de rotation du moteur est inférieure à ladite valeur.

Lors d'une longue décélération, la ou les phases de réalimentation temporaire permettent de maintenir un certain degré de mouillage des parois du collecteur d'admission et d'éviter ainsi le risque de calalge lorsque se produira la réalimentation définitive.

Suivant une caractéristique de ce procédé:

on compare également périodiquement ladite décélération à un seuil décélération rapide, on commande une réalimentation définitive et immédiate du moteur si ladite décélération est supérieure au seuil de décélération rapide, et

on commande une réalimentation définitive du moteur à partir d'un premier seuil de vitesse déterminé si ladite décélération est comprise entre les seuils de décélération rapide et lente. Grâce à la combinaison de cette seconde caractéristique avec la première précitée, le procédé de l'invention permet de faire face à différentes conditions de décélération du moteur, que celle-ci soit rapide, lente, ou de valeur intermédiaire.

De préférence, comme dans les procédés de la technique antérieure, on calcule et on compare périodiquement la vitesse de rotation du moteur audit premier seuil de vitesse déterminé et on commande une réalimentation immédiate et définitive du moteur si ladite vitesse est inférieure audit premier seuil de vitesse déterminé. Ce dernier peut être une fonction d'au moins un parmi plusieurs paramètres de fonctionnement du moteur.

Suivant une autre caractéristique, on commande la réalimentation temporaire à partir d'un second seuil de vitesse également calculé en fonction d'un moins un parmi plusieurs paramètres de fonctionnement du moteur. La durée de réalimentation temporaire peut être également calculée en fonction d'au moins un parmi plusieurs de ces paramètres. Cette durée peut être calculée soit sous forme d'un temps, soit sous celle d'un nombre de tours ou de fractions de tours du moteur. Les paramètres précités peuvent comprendre, par exemple, la vitesse de rotation que présentait le moteur lors de la coupure de son alimentation, la température de son liquide de refroidissement, ainsi que sa vitesse et sa décélération calculées périodiquement.

Une autre caractéristique de l'invention réside dans le fait que l'on continue à calculer périodiquement la vitesse et la décélération du moteur pendant les phases de réalimentation temporaire.

Enfin, suivant une forme préférentielle de mise en oeuvre du procédé, on commande la réalimentation temporaire si la différence entre le second seuil de vitesse de réalimentation temporaire calculé et le premier seuil de vitesse de réalimentation définitive est supérieure à une valeur déterminée et on commande une réalimentation définitive du moteur à partir du premier seuil de vitesse si ladite différence est inférieure à la valeur déterminée.

D'autres, avantages de l'invention ressortiront de la description qui va suivre d'un mode de sa réalisation donné uniquement à titre d'exemple, illustré par les dessins annexés sur lesquels:

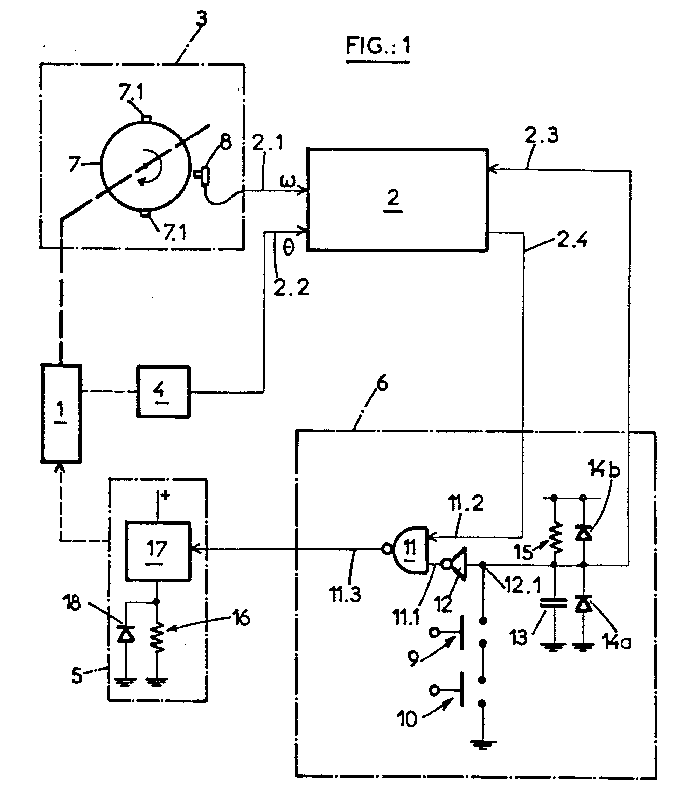

La figure 1 est un schéma d'un exemple de réalisation de dispositif électronique pour la mise en oeuvre du procédé de commande de réalimentation d'un moteur à combustion interne;·

La figure 2 est un organigramme illustrant la mise en oeuvre du procédé par un microprocesseur faisant partie du dispositif de la figure 1;

La figure 3 est un chronogramme illustrant le procédé de réalimentation temporaire suivant l'invention;

La figure 4 est un chronogramme illustrant un cas particulier du procédé suivant lequel le régime de réalimentation définitive du moteur est variable.

En se référant à la figure l'un dispositif de commande électronique est associé à un moteur à combustion interne 1 à allumage commandé et à alimentation en carburant par injection ou carburation. Le dispositif de commande électronique comprend un microcalculateur 2, un dispositif 3 de mesure de la vitesse de rotation du moteur 1, un capteur 4 de température du liquide de refroidissement du moteur, un dispositif 5 d'alimentatation en carburant du moteur et un circuit logique 6 de commande du dispositif d'alimentation 5.

Le microcalculateur 2 reçoit sur son entrée 2.1 l'information ω de vitesse de rotation du moteur, sur son entrée 2.2 l'information 0 de température de liquide de refroidissement, et sur son entrée 2.3 une information logique en provenance du circuit 6. Il délivre sur une sortie 2.4 une information logique qui est appliquée au circuit 6. Le microcalculateur 2 peut être constitué de tout microprocesseur de type connu ou de tout ensemble de circuits logiques comportant des circuits de temporisation, des circuits d'entrée/sortie, une unité arithmétique et logique, une horloge, des codeurs et décodeurs d'adresses et des mémoires ives et mortes.

Le dispositif de mesure 3 de la vitesse de rotation du moteur peut être constitué par tout moyen connu de mesure de vitesse tel que, par exemple, celui décrit dans le brevet français No. 79 00386 (FR—A—2 446 467). Dans l'exemple représenté, ce dispositif comporte une cible 7 solidaire en rotation du vilebrequin du moteur 1 et présentant à sa périphérie un ou plusieurs accidents 7.1 placés dans des positions angulaires prédéterminées de la rotation du vilebrequin et qui sont détectés à chaque tour du moteur lors de leur passage devant un capteur 8, par exemple un capteur magnétique. La cible 7 peut être constituée par exemple par une couronne dentée à sa périphérie et dont deux dents ont été omises dans des positions diamétralement opposées pour constituer les accidents 7.1. Le signal de sortie du capteur 8 est traité dans un circuit de mise en forme (non représenté) avant son application au microcalculateur 2.

Le capteur 4 peut être constitué par un thermocontact à deux seuils et délivrant un signal logique qui prend l'état haut lorsque la température du liquide de refroidissement du moteur est comprise entre deux valeurs TO et TC où TO est la température à partir de laquelle on interrompt le classique enrichissement à froid lors de la mise en action du moteur et TC est la température nominale de fonctionnement à chaud du moteur.

Le circuit logique de commande 6 comprend un contact 9 de détection de position pied levé de la pédale d'accélérateur monté en série avec un contact d'embrayage 10 entre la masse et une entrée 12.1 d'un inverseur 12 connecté à une entrée 11.1 d'une porte NAND 11 dont l'autre entrée 11.2 est connectée à la sortie 2.4. du microcalculateur 2. Le contact 9 peut être un micro-contact qui, soit est lié à la pédale d'accélérateur, soit est fixé à la butée du papillon d'un carburateur (non représenté) pour détecter une position sensiblement fermée du papillon suivant une disposition connue de l'homme de 1 art. Ce micro-contact 9 est ouvert lorsque la pédale d'accélérateur est enfoncée et il est fermé lorsque le conducteur lève le pied et relâche complètement la pédale d'accélérateur, c'est-à-dire lorsque le moteur est en phase de décélération. En série avec le contact 9, le contact 10 de type connu peut être disposé sur la pédale d'embrayage pour être fermé lorsque la pédale d'embrayage est relâchée et ouvert lorsque la pédale d'embrayage est enfoncée, c'est-à-dire lors des phases de débrayage.

L'entrée 12.1 de l'inverseur 12 et l'entrée 2.3 du microcalculateur 2 sont également connectées à la masse par l'intermédiaire du montage en parallèle d'un condensateur 13 et d'une diode 14a et au pôle positif d'une source d'alimentation (non représentée) par l'intermédiaire du montage en parallèle d'une résistance 15 et d'une diode 14b. Suivant cette dispossition, un niveau logique bas est appliqué aux entrées 12.1 et 2.3 lorsque les contacts en série 9—10 sont fermés et un niveau logique haut est appliqué à ces mêmes entrées lorsqu'au moins l'un des deux contacts 9 et 10 est ouvert.

En d'autres termes, comme cela résultera de la suite de la description, la coupure de l'alimentation en carburant du moteur n'est autorisée que lorsque les contacts 9 et 10 sont fermés. Lorsque les deux entrées 11.1 et 11.2 de la porte NAND sont à un niveau haut, sa sortie 11.3 est alors à un niveau bas et interdit l'alimentation de l'enroulement d'une électrovanne 16 par un circuit de puissance 17. Une diode antiretour 18 est connectée en parallèle avec l'enroulement de l'électrovanne 16.

Si le dispositif d'alimentation 5 est du type à carburation, l'électrovanne 16 peut être placée dans le circuit d'alimentation en carburant du carburateur de manière à laisser passer ou interrompre le débit de carburant. Dans ce cas, la sortie 2.4. du microcalculateur 2 est toujours au niveau logique 1 pendant les phases de coupure del alimentation en carburant.

Si le dispositif d'alimentation 5 représente un système d'injection, l'électrovanne 16 peut être un injecteur électromagnétique. On supposera alors que la porte 11 et l'inverseur 12 sont supprimés et que l'information relative à l'état des contacts 9 et 10 est appliquée uniquement à l'entrée 2.3 du microcalculateur. Suivant que celui-ci détermine ou non une phase de coupure en décélération, il interdit ou autorise la délivrance sur sa sortie 2.4 d'impulsions de commande des injecteurs qui sont appliquées directement au circuit de puissance 17.

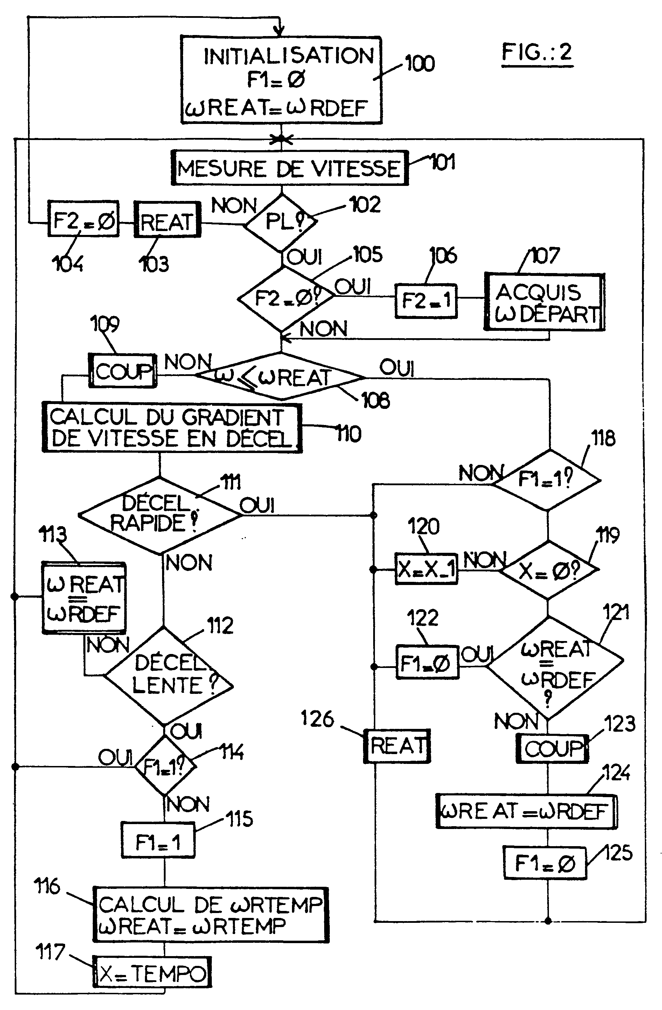

En fonctionnement, le microcalculateur 2 fait l'acquisition de l'information de vitesse moteur transmise par le dispositif de mesure 3, du signal logique indicatif de la plage de températures (TO, TC) fourni par le thermo-contact 4 et du signal d'autorisation ou non de coupure de l'alimentation en carburant délivré par le circuit logique 6 sur son entrée 2.3. En fonction de ces paramètres d'entrée, le microcalculateur 2 autorise ou non la coupure d'alimentation au moyen d'une commande logique adressée au circuit 6 sur sa sortie 2.4 et détermine les différents seuils de vitesse et de décélération en fonction desquels sont prises les décisions de maintien de coupure de l'alimentation, de réalimentation temporaire ou de réalimentation définitive comme cela résultera de la description qui va suivre de l'organigramme de la figure 2 auquel on se reportera maintenant.

A l'étape 100 de ce programme, on procède à l'initialisation du système en positionnant un drapeau F1 à 0 et en chargeant comme seuil de vitesse de réalimentation $\omega$ REAT une valeur $\omega$ RDEF qui est le seuil de vitesse de réalimentation définitive.

On passe ensuite à l'étape 101 où l'on effectue une mesure de la vitesse de rotation du moteur puis au test 102 où est pris en compte l'état des contacts 9 et 10. Si l'on ne se trouve pas dans une position de pied levé, c'est-à-dire si l'un au moins des contacts 9 et 10 est ouvert, on passe à l'étape 103 qui commande la réalimentation ou le maintien de l'alimentation en carburant du moteur puis à l'étape 104 où un drapeau F2 est forcé à 0, puis on revient au début de l'étape 100.

Si le test 102 est positif, c'est-à-dire qu'une position de pied levé est détectée, on passe au test 105 portant sur la valeur que présente le drapeau F2. Ce test a pour but de n'autoriser qu'une seule fois la mémorisation de la vitesse $\omega$ au moment où l'on passe d'une position pied enfoncé à une position pied levé. Si le drapeau F2 est égal à 0, c'est-à-dire que l'on n'était pas jusqu'alors dans une position de pied levé, on passe à l'étape 106 où l'on force ce drapeau F2 à la valeur 1 puis à l'étape 107 où l'on fait l'acquisition de la vitesse $\omega$ DEPART que présente le moteur au moment de la détection du passage en position pied levé. Après l'étape 107, ou en cas de réponse négative au test 105, on compare au test 108 la dernière valeur mesurée de la vitesse $\omega$ du moteur au seuil de vitesse de réalimentation $\omega$ REAT qui a été chargé Lors du premier déroulement du programme, $\omega$ REAT est bien entendu égale à la valeur $\omega$ RDEF chargée à l'étape d'initialisation.

Si la dernière valeur mesurée $\omega$ de la vitesse du moteur est supérieure au seuil $\omega$ REAT de réalimentation, on provoque en 109 la coupure de l'alimentation en carburant du moteur. On calcule en suite en 110 le gradient de vitesse en décélération du moteur. A cet effet, on peut comparer soit la période de rotation du moteur sur des intervalles angulaires égaux consécutifs, soit la rotation angulaire décrite par le moteur sur des périodes de temps égales consécutives.

Si la décélération calculée est supérieure à un seuil prédéterminé de décélération rapide, le test 111 conduit à une étape 126 de réalimentation immédiate en carburant du moteur. Sinon, le test 111 conduit au test 112 où la décélération calculée est comparée à un seuil prédéterminé de décélération lente. Si la décélération calculée est supérieure à ce seuil, c'est qu'elle est comprise entre les seuils de décélération lente et rapide et l'on passe alors à l'étape 113 où l'on force le seuil de réalimentation $\omega$ REAT à la valeur $\omega$ RDEF de vitesse de réalimentation définitive. Bien entendu, cette étape 113 n'entraîne aucune modification si l'on avait déjà $\omega$ REAT = $\omega$ RDEF. Après l'étape 113, on revient ensuite à l'étape 101 de mesure de vitesse.

Si l'étape 112 fait apparaître que la décélération calculée est inférieure au seuil de décélération lente, un test portant sur la valeur du drapeau F1 est effectué en 114. Si le drapeau F1 est égal à 1, c'est que l'on a déjà détecté précédemment une situation de décélération lente pendant une phase de coupure d'alimentation en décélération et on revient alors directement à l'étape 101 de mesure de vitesse. Sinon, on passe à l'étape 115 où l'on affecte la valeur 1 au drapeau F1.

On calcule ensuite à l'étape 116 un seuil de vitesse de réalimentation temporaire ω RTEMP. Ce seuil est calculé en fonction de la valeur ω DEPART acquise à l'étape 107, de la température 0 du liquide de refroidissement mesuréepar le capteur 4, du gradient de décélération mesuré à l'étape 110 et du seuil ω RDEF de vitesse de réalimentation définitive. En outre, on peut prévoir que si la différence entre le seuil ω RTEMP de vitesse de réalimentation temporaire ainsi calculé et le seuil ω RDEF de réalimentation définitive est inférieure à une valeur déterminée, on impose ω RTEMP = ω RDEF, ce qui revient à supprimer la réalimentation temporaire comme on le verra dans la suite.

On calcule ensuite à l'étape 117 la durée X de réalimentation temporaire. Dans le cas précité où ω RTEMP est égal à ω RDEF, on impose une durée de temporisation nulle. Dans les autres cas, cette durée de réalimentation temporaire est calculée en fonction des paramètres précités de fonctionnement du moteur comprenant la vitesse ω DEPART de rotation du moteur lors de la coupure en décélération, la température 0 du liquide de refroidissement et les vitesse et décélération calculées périodiquement en 101 et 110. Après l'étape 117, on revient à l'étape 101.

Chaque passage d'un accident 7.1 de la cible 7 devant le capteur 8 provoque une nouvelle mesure de vitesse et un nouveau déroulement de l'organigramme. Comme on l'a indiqué précédemment, la vitesse de rotation du moteur peut être également mesurée sur des intervalles de temps égaux et ce sont alors les signaux de temporisation déterminant ces intervalles qui servent d'interruption pour le déroulement du programme.

Si l'on suppose maintenant qu'une condition de décélération lente a été détectée à l'étape 112 et qu'un seuil de réalimentation temporaire ω RTEMP a été calculé à l'étape 116, la réponse au test 108 va être positive lorsque la vitesse de rotation mesurée du moteur deviendra pour la première fois inférieure au seuil de réalimentation ω REAT = ω RTEMP. Ceci conduit à un test 118 où l'on examine la valeur du drapeau F1. Dans l'hypothèse considérée d'une décélération lente, F1 a été fixé à 1 à l'étape 115 et le test 118 conduit au test 119.

Ce test porte sur la valeur X de la temporisation calculée à l'étape 117. Tant que X n'est pas égal à 0, on passe à l'étape 120 où l'on décrémente X d'une unité. L'étape 120 conduit ensuite à l'étape 126 qui place le dispositif 5 en état d'alimentation du moteur. Il peut s'agir d'une réalimentation si celleci était préalablement coupée, ou un maintien de cette alimentation dans le cas où l'on se trouvait déjà dans une phase de réalimentation temporaire.

Lorsque la durée totale de réalimentation temporaire s'est écoulée, la temporisation X prend la valeur 0 et le test 119 conduit au test 121. On examine alors si le seuil de réalimentation chargé en vue de procéder au test 108 est égal au seuil ω RDEF de réalimentation définitive. Si tel est le cas, c'est que l'on se trouve dans l'hypothèse envisagée à propos de l'étape 116 où l'on a imposé ω RTEMP = ω REAT et X = 0 (étape 117). Cela signifie que l'on arrive à la fin d'une phase de coupure d'alimentation en décélération de sorte que l'on affecte la valeur 0 au drapeau F1 à l'étape 122 et que l'on provoque ensuite la réalimentation du moteur à l'étape 126.

Une réponse négative au test 121 signifie que ω REAT chargée est une vitesse de réalimentation temporaire différente du seuil de vitesse de réalimentation définitive. Comme l'étape 119 a montré qu'on était arrivé à la fin de la durée de réalimentation temporaire, on provoque alors en 123 la coupure de l'alimentation en carburant du moteur. On affecte ensuite la valeur ω RDEF à ω REAT en 124 et la valeur 0 au drapeau F1 en 125.

Les étapes 126 et 125 ramènent toutes deux à l'étape 101.

La description de l'organigramme de la figure 2 faite jusqu'à présent a permis de considérer principalement le cas d'une décélération rapide et d'une décélération lente. On notera que dans cette dernière hypothèse, le procédé suivant l'invention peut conduire à une ou plusieurs phases de réalimentation temporaire suivant que la vitesse ω DEPART au moment de la coupure est plus ou moins élevée, que le gradient de décélération est plus ou moins important, que la température 0 du liquide de refroidissement est inférieure ou supérieure au seuil TC, etc... 11 doit être également entendu, bien que cela n'ait pas été figuré sur l'organigramme pour en alléger la lecture et la description, que des tests sont effectués sur cette température 0. Par exemple, tant que 0 n'a pas atteint la valeur TO précitée, on ne provoque pas de coupure de l'alimentation malgré une détection de position de pied levé et d'une vitesse du moteur supérieure au seuil ω RDEF de réalimentation définitive.

Le dernier cas à envisager est celui d'une décélération du moteur comprise entre les seuils de décélération rapide et lente. On a vu que cette hypothèse conduit à affecter la valeur ω RDEF à ω REAT à l'étape 113. Dans ce cas, il ne se produira pas de réalimentation temporaire et, lorsque la vitesse de rotation du moteur sera descendue en dessous de ω RDEF, les tests 108 et 118 conduiront directement à l'étape 126 de réalimentation en carburant du moteur.

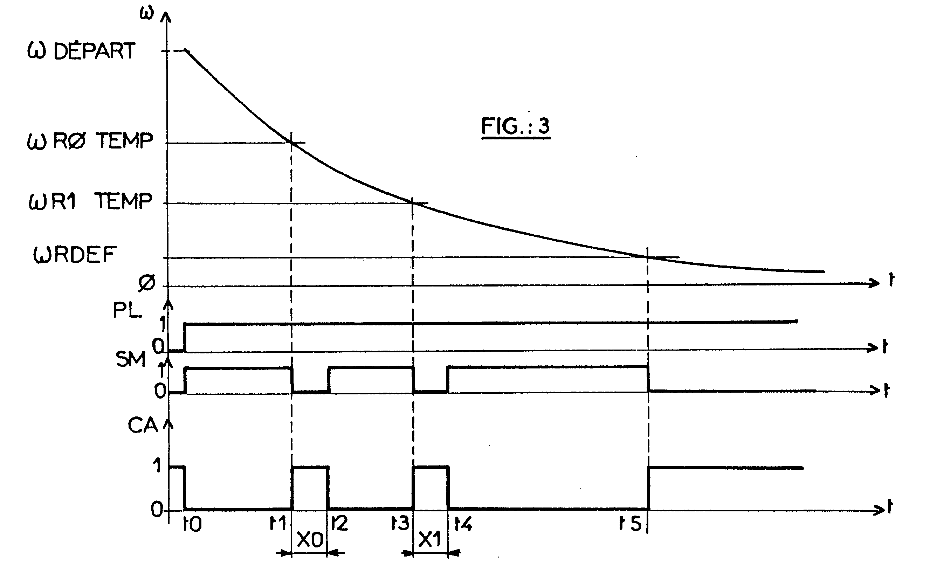

Le chronogramme de la figure 3 illustre un exemple de déroulement du procédé décrit comportant deux phases de réalimentation temporaire. A l'instant to, une condition de pied levé est détectée et le signal PL à l'entrée 11.1 de la porte NAND 11 passe du niveau logique 0 au niveau logique 1. Le microcalculateur 2 détecte également cette condition de pied levé sur son entrée 2.3 et fait l'acquisition de la vitesse ω DEPART qui est comparée au seuil ω RDEF de vitesse de réalimentation définitive. Comme ω DEPART est supérieure à ω RDEF, le signal SM présent sur la sortie 2.4 du microcalculateur passe du niveau logique 0 au niveau logique 1. Par conséquent, la sortie 11.3 de la porte NAND 11 passe d'un niveau logique haut à un niveau logique bas, ce qui a pour effet d'interrompre l'alimentation du moteur en carburant (signal CA).

Le microcalculateur 2 détecte une condition de décélération lente et calcule un seuil de vitesse ω ROTEMP et une durée XO de réalimentation temporaire. Lorsque, à l'instant t1, la vitesse ω de rotation du moteur atteint ω ROTEMP, le signal SM passe de 1 à 0 et le signal CA de commande d'alimentation présent sur la sortie de la porte NAND passe de 0 à 1. Le moteur est donc réalimenté temporairement pendant la durée calculée XO qui se termine à l'instant t2 où le signal SM à la sortie 2.4 du microcalculateur repasse à l'état 1. L'alimentation en carburant du moteur est donc à nouveau coupée.

Compte tenu des différents paramètres de fonctionnement du moteur pris en compte, le microcalculateur 2 calcule un nouveau seuil ω R1TEMP de réalimentation. Lorsque la vitesse ω du moteur atteint cette valeur à l'instant t3, l'alimentation en carburant est rétablie pour la durée X1 calculée.

L'alimentation en carburant est ensuite interrompue jusqu'à l'instant t5 où la vitesse de rotation ω du moteur est descendue jusqu'au seuil ω RDEF de réalimentation définitive.

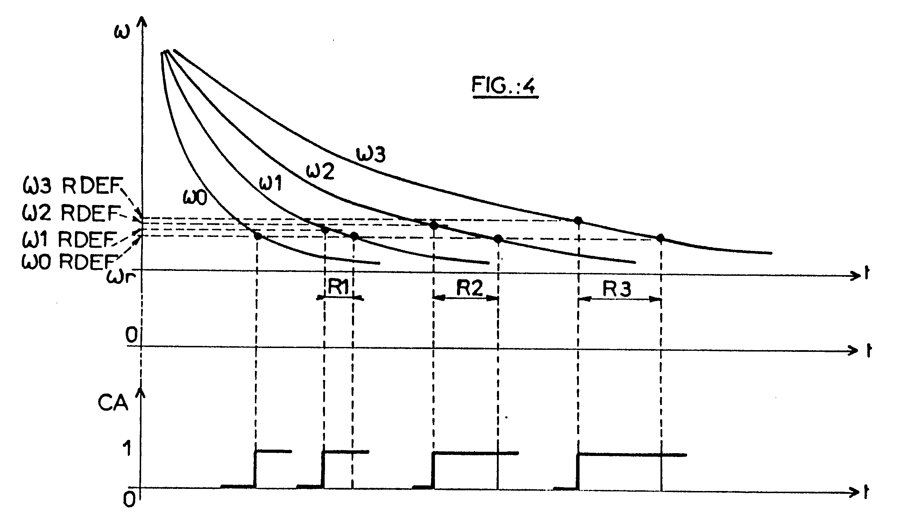

La figure 4 est un chronogramme illustrant une variante du procédé de commande de réalimentation en carburant décrit précédemment.

Comme cela a déjà été indiqué, les problèmes de calage du moteur à la suite d'une coupure de carburant en décélération sont souvent dus à l'assèchement des parois du collecteur d'admission lors des décélérations lentes de longue durée. Pour y remédier, il est possible de combiner le processus de réalimentation temporaire avec un seuil ω RDEF de réalimentation définitive variable proportionnellement au gradient de décélération.

La figure 4 montre quatre courbes ω0 à ω3 qui, prises dans cet ordre, présentent des profils de décélération décroissants. A chacune de ces courbes est associé un seuil particulier de vitesse de réalimentation définitive ω 0RDEF, ω 1RDEF, ω 2RDEF et ω 3RDEF respectivement. On constate que plus le gradient de décélération est faible, plus le seuil de vitesse de réalimentation définitive remonte. Les valeurs R1, R2 et R3 représentent l'anticipation de la réalimentation définitive pour les courbes ω1, ω2 et ω3 respectivement par rapport à l'intant auquel aurait eu lieu cette réalimentation définitive si le seuil avait eu la valeur fixe ω 0RDEF.

Les différents seuils ω 0RDEF, ω 1RDEF, etc . . . sont calculés par le microcalculateur 2 en fonction de la décélération du moteur calculée périodiquement, suivant une loi déterminée empiriquement de manière que, quel que soit le gradient de décélération, la vitesse du moteur tende asymptotiquement vers la vitesse de ralenti ω R après que soit intervenue la réalimentation en carburant.

## Revendications

1. Procédé de commande de la réalimentation en carburant d' un moteur à combustion interne consécutivement à une coupure de son alimentation pendant une phase de décélération, du type consistant à calculer et à comparer périodiquement la décélération du moteur à un seuil de décélération lente pendant ladite phase de coupure de décélération, caractérisé en ce que:
— on commande au moins une réalimentation temporaire du moteur pendant une durée déterminée (X) si ladite décélération est inférieure audit seuil, et la vitesse de rotation du moteur est supérieure à une valeur (ω RDEF) et,
— on commande une réalimentation définitive du moteur si ladite décélération est supérieure audit seuil, et la vitesse de rotation du moteur est inférieure à ladite valeur.

2. Procédé selon la revendication 1, caractérisé en ce que:
— on compare également périodiquement ladite décélération à un seuil de décélération rapide,
— on commande une réalimentation définitive et immédiate du moteur si ladite décélération est supérieure au seuil de décélération rapide, et
— on commande une réalimentation définitive du moteur à partir d'un premier seuil de vitesse déterminé (ω RDEF) si ladite décélération est comprise entre les seuils de décélération rapide et lente.

3. Procédé selon la revendication 2, caractérisé en ce que:
— on calcule et on compare périodiquement la vitesse (ω) de rotation du moteur audit premier seuil de vitesse déterminé (ω RDEF) et
— on commande une réalimentation immédiate et définitive du moteur si ladite vitesse (ω) est inférieure audit premier seuil de vitesse déterminé (ω RDEF).

4. Procédé selon la revendication 3, caractérisé en ce que ledit premier seuil de vitesse déterminé (ω RDEF) est d'autant plus élevé que le gradient de décélération du moteur est faible.

5. Procédé selon l'une quelconque des revendications 1 à 4, caractérisé en ce qu'on commande ladite réalimentation temporaire à partir d'un second seuil de vitesse (ω RTEMP) calculé en fonction d'au moins un parmi plusieurs paramètres de fonctionnement du moteur.

6. Procédé selon la revendication 5, caractérisé en ce que ladite durée déterminée (X) de réalimentation temporaire est également calculée en fonction d'au moins un parmi plusieurs paramètres de fonctionnement du moteur.

7. Procédé selon la revendication 6, caractérisé en ce que ladite durée de réalimentation temporaire (X) est calculée sous forme d'un nombre de tours ou fraction de tours du moteur.

8. Procédé selon l'une quelconque des revendications 5 et 6, caractérisé en ce que les paramètres de fonctionnement du moteur comprennent la vitesse de rotation du moteur lors de ladite coupure en décélération, la température du liquide de refroidissement du moteur, et lesdites vitesse et décélération calculées périodiquement.

9. Procédé selon l'une quelconque des revendications 1 et 3, caractérisé en ce qu'on continue à calculer périodiquement la vitesse (ω) et la décélération du moteur pendant les phases de réalimentation temporaire.

10. Procédé selon les revendications 3 et 5,
caractérisé en ce qu'on commande ladite réalimentation temporaire si la différence entre le
second seuil de vitesse de réalimentation temporaire calculé (ω RTEMP) et le premier seuil de
vitesse de réalimentation définitive (ω RDEF) est
supérieure à une valeur déterminée et on commande une réalimentation définitive du moteur à
partir du premier seuil de vitesse si ladite différence est inférieure à la valeur déterminé.

**Patentansprüche**

1. Verfahren zur Kontrolle der Kraftstoffversorgung einer Brennkraftmaschine nach einer Unterbrechung der Kraftstoffversorgung während einer
Verzögerungsphase, wobei periodisch die Verzögerung des Motors gemessen und mit einem
Schwellwert für langsame Verzögerung während
dieser Verzögerungsphase verglichen wird,
dadurch gekennzeichnet, daß.
— wenigstens eine zeitweise Versorgung des
Motors erfolgt während einer vorbestimmten Zeit
(X), sofern die Verzögerung unterhalb der
Schwelle liegt und die Rotationsgeschwindigkeit
des Motors oberhalb eines Wertes (ω RDEF) liegt
und
— eine endgültige Versorgung des Motors
erfolgt, sofern die Verzögerung oberhalb der
Schwelle liegt und die Rotationsgeschwindigkeit
des Motors unterhalb dieses Wertes liegt.

2. Verfahren nach Anspruch 1, dadurch gekennzeichnet, daß
— ebenfalls periodisch die Verzögerung mit
einem Schwellwert für schnelle Verzögerung verglichen wird,
— eine endgültige und sofortige Versorgung des
Motors erfolgt, sofern diese Verzögerung oberhalb des Schwellwertes der schnellen Verzögerung liegt und
— eine endgültige Versorgung des Motors
erfolgt ausgehend von einem ersten vorgegebenen Geschwindigkeitsschwellwert (ω RDEF),
sofern die Verzögerung zwischen den Schwellwerten für langsame und schnelle Verzögerung liegt.

3. Verfahren nach Anspruch 2, dadurch gekennzeichnet, daß:
— periodisch die Rotationsgeschwindigkeit (ω)
des Motors berechnet und verglichen wird mit
dem ersten vorgegebenen Geschwindigkeitsschwellwert (ω RDEF) und
— eine sofortige und endgültige Versorgung des
Motors erfolgt, sofern die Geschwindigkeit (ω)
kleiner ist als der vorgegebene Geschwindigkeitsschwellwert (ω RDEF).

4. Verfahren nach Anspruch 3, dadurch gekennzeichnet, daß der erste vorgegebene Geschwindigkeitsschwellwert (ω RDEF) mit abnehmendem
Verzögerungsgradient des Motors ansteigt.

5. Verfahren nach einem der Ansprüche 1 bis 4,
dadurch gekennzeichnet, daß die zeitweise Versorgung des Motors erfolgt ausgehend von einem zweiten Geschwindigkeitsschwellwert (ω RTEMP),
der als Funktion wenigstens eines von mehreren
Betriebsparametern des Motors berechnet wird.

6. Verfahren nach Anspruch 5, dadurch gekennzeichnet, daß die vorbestimmte Zeit (X) der zeitweisen Versorgung ebenfalls als Funktion wenigstens eines von mehreren Betriebsparametern des
Motors berechnet wird.

7. Verfahren nach Anspruch 6, dadurch gekennzeichnet, daß die vorbestimmte Zeit (X) der zeitweisen Versorgung berechnet wird in Form einer
Anzahl von Umdrehungen oder Teilumdrehungen
des Motors.

8. Verfahren nach einem der Ansprüche 5 und 6,
dadurch gekennzeichnet, daß die Betriebsparameter des Motors die Rotationsgeschwindigkeit des
Motors während des Verzögerungsunterbrechens, die Temperatur der Kühlflüssigkeit des
Motors und die periodisch berechnete Geschwindigkeit und Verzögerung umfassen.

9. Verfahren nach einem der Ansprüche 1 und 3,
dadurch gekennzeichnet, daß weiterhin während
der zeitweisen Versorgung des Motors dessen
Geschwindigkeit (ω) und dessen Verzögerung
berechnet werden.

I0. Verfahren nach Ansprüchen 3 und 5, dadurch
gekennzeichnet, daß die zeitweise Versorgung
erfolgt, wenn der Unterschied zwischen dem zweiten Schwellwert der berechneten zeitweisen Versorgung (ω RTEMP) und dem ersten Schwellwert
der endgültigen Versorgung (ω RDEF) oberhalb
eines vorgegebenen Wertes liegt und daß eine
endgültige Versorgung des Motors erfolgt ausgehend von einem ersten Schwellwert, wenn dieser
Unterschied unterhalb des vorgegebenen Wertes
liegt.

**Claims**

1. A process for controlling the resumption of
the supply of fuel to an internal combustion engine
subsequently to cutting off of the supply of fuel to
the engine during a deceleration phase, of the type
comprising calculating and comparing periodically the deceleration of the engine to a slow
deceleration threshold during said deceleration
cut-off phase, characterised by:
— effecting at least one temporary resumption of
the supply of fuel to the engine during a given
duration (X) if said deceleration is below said
threshold and the speed of rotation of the engine is
higher than a value (ω RDEF), and
— effecting definitive resumption of the supply
of fuel to the engine if said deceleration is higher
than said threshold and the speed of rotation of the
engine is below said value.

2. A process according to claim 1 characterised
by:
— also periodically comparing said deceleration
to a rapid deceleration threshold,
— effecting definitive and immediate resumption of the supply of fuel to the engine if said
deceleration is higher than the rapid deceleration
threshold, and
— effecting definitive resumption of the supply of fuel to the engine from a first given speed threshold ($\omega$ RDEF) if said deceleration is between the rapid and slow deceleration thresholds.

3. A process according to claim 2 characterised by:
— calculating and comparing periodically the speed ($\omega$) of rotation of the engine to said first given speed threshold ($\omega$ RDEF) and
— effecting immediate and definitive resumption of the supply of fuel to the engine if said speed ($\omega$) is below said first given speed threshold ($\omega$ RDEF).

4. A process according to claim 3 characterised in that said first given speed threshold ($\omega$ RDEF) increases in proportion to a decreasing engine deceleration gradient.

5. A process according to any one of claim 1 to 4 characterised by effecting said temporary resumption of the supply of fuel to the engine from a second speed threshold ($\omega$ RTEMP) which is calculated in dependence on at least one of a plurality of operating paramters of the engine.

6. A process according to claim 5 characterised in that said given duration (X) for temporary resumption of the supply of fuel to the engine is also calculated in dependence on at least one of a plurality of operating paramters of the engine.

7. A process according to claim 6 characterised in that said duration (X) for the temporary resumption of the supply of fuel to the engine is calculated in the form of a number of revolutions or fractions of revolutions of the engine.

8. A process according to either one of claim 5 and 6 characterised in that the operating paramters of the engine comprise the speed of rotation of the engine when said fuel cut-off in the deceleration mode occurs, the temperature of the cooling liquid of the engine, and said periodically calculated speed and deceleration.

9. A process according to either one of claims 1 and 3 characterised by continuing periodically to calcuate the speed ($\omega$) and the deceleration of the engine during the temporary fuel supply resumption phases.

10. A process according to claim 3 and 5 characterised by effecting said temporary resumption of the supply of fuel to the engine if the difference betwen the second calculated threshold ($\omega$ RTEMP) in respect of speed for the temporary resumption of the supply of fuel to the engine and the first theshold in respect of speed for definitive resumption of the supply of fuel to the engine ($\omega$ RDEF) is higher than a given value and effecting definitive resumption of the supply of fuel to the engine from the first speed threshold if said difference is below the given value.

FIG.: 1

**EP 0 240 409 B1**

FIG.: 2

FIG.: 3

EP 0 240 409 B1

FIG.:4

EP 0 240 409 B1